# EUROPÄISCHE PATENTSCHRIFT

(11) **EP 0 971 934 B1**
(45) Veröffentlichungstag und Bekanntmachung des Hinweises auf die Patenterteilung: **07.08.2002**
(21) Anmeldenummer: 98922628.7
(22) Anmeldetag: 23.03.1998
(51) Int. Cl.: C07F 7/12, C07F 7/08, C04B 35/571, D01F 9/10

(54) **BORHALTIGE CARBOSILANE, BORHALTIGE OLIGO- ODER POLYCARBOSILAZANE UND SILICIUMBORCARBONITRIDKERAMIKEN**
BORON-CONTAINING CARBOSILANES, BORON-CONTAINING OLIGO OR POLYCARBOSILAZANES AND SILICON BOROCARBONITRIDE CERAMICS
CARBOSILANES CONTENANT DU BORE, OLIGO- OU POLYCARBOSILAZANES CONTENANT DU BORE ET CERAMIQUES A CARBONITRURE BORIQUE DE SILICIUM

(30) Priorität: 03.04.1997 DE 19713767
(43) Veröffentlichungstag der Anmeldung: 19.01.2000
(73) Patentinhaber: Bayer Aktiengesellschaft, 51368 Leverkusen (DE)
(72) Erfinder: EILING, Aloys, D-44866 Bochum (DE); RIEDEL, Ralf, D-64832 Babenhausen (DE); RUWISCH, Lutz, D-64287 Darmstadt (DE)
(86) Internationale Anmeldenummer: EP9801671
(87) Internationale Veröffentlichungsnummer: WO9845303

(56) Entgegenhaltungen:
- EP-A- 0 502 399
- DE-A- 4 320 782
- AUNER, N. ET AL: "Reactivity of the silicon-carbon bond in silacyclobutanes" Z. ANORG. ALLG. CHEM. (1983), 500, 132-60 CODEN: ZAACAB;ISSN: 0044-2313, 1983, XP002073120
- CHEMICAL ABSTRACTS, vol. 83, no. 4, 28. Juli 1975 Columbus, Ohio, US; abstract no. 36973, ZELDIN, M. ET AL: "Pentachloroborosilane. Synthesis by electric discharge and reaction with cyclopropane" XP002073122 & J. INORG. NUCL. CHEM. (1975), 37(1), 25-8 CODEN: JINCAO, 1975,
- LIM, T.F.O. ET AL.: "REGIOSELECTIVE HYDROBORATIONS OF METHYLVINYLCHLOROSILANES" JOURNAL OF ORGANOMETALLIC CHEMISTRY, Bd. 135, Nr. 2, 1977, Seiten 249-259, XP002073121
- W. Gerrard " the Organic Chemistry of Boron" Acadenic Press , London, N.Y. 1961, pp. 81,152-155

## Beschreibung

Die vorliegende Erfindung betrifft borhaltige Carbosilane, ein Verfahren zu deren Herstellung, borhaltige Oligo- oder Polycarbosilazane, ein Verfahren zu deren Herstellung und deren Verwendung sowie Siliciumborcarbonitridkeramiken und ein Verfahren zu deren Herstellung.

Das Verfahren zur Erzeugung multinärer, nichtoxidischer Keramiken über molekulare Einkomponentenvorläufer hat eine herausragende Bedeutung erlangt. Es eröffnet den Zugang zu nitridischen, carbidischen und carbonitridischen Stoffsystemen, die über herkömmliche Festkörperreaktionen nicht herstellbar sind. Die Produkte zeichnen sich durch hohe Reinheit und homogene Elementverteilung auf molekularem Niveau aus.

Keramische Werkstoffe, die aus Si, B, N und C bestehen, zeigen besondere Eigenschaften hinsichtlich der thermischen Stabilität und der Oxidationsbeständigkeit. Sie können als Bulkmaterial, in Verbundwerkstoffen aber auch für Beschichtungen oder als keramische Fasern technischen Einsatz finden. Diese amorphen borhaltigen Materialien zeichnen sich gegenüber den borfreien (Si-C-N)-Verbindungen durch eine erhöhte Kristallisationshemmung aus, während die kohlenstoffhaltigen darüber hinaus höhere Zersetzungstemperaturen aufweisen als die kohlenstofffreien.

Gemäß US -A 5,233,066 gelingt die Synthese der amorphen Keramiken Si₃B₃N₇ und SiBN₃C aus dem Precursor Trichlorsilyl-amino-dichlorboran (TADB) durch Vernetzung mit Ammoniak oder Aminen und anschließender Pyrolyse im Gasstrom. Gemäß DE -A 4320785 werden Trissilylalkylborane der Formel B[-C₂H₄-SiCl₂X]₃ erhalten, indem man Vinylsilane der Formel CH₂=CH-SiCl₂X mit BH₃-THF umsetzt.

Aus diesem Einkomponentenvorläufer hergestellte kohlenstoffreiche Keramiken weisen ein (Si:B)-Verhältnis von 3:1 auf.

In Organosilicon Chemistry III VCH, (1997) wird durch Hydroborierung von Vinylsilan mit BH₂Cl-SMe₂ ein Einkomponentenvorläufer für Si,B,N,C-enthaltende Keramik, im folgenden abgekürzt als SiBNC, beschrieben, der ein festes Si:B-Verhältnis von 2:1 aufweist, das auch in der Keramik erhalten bleibt.

Bei allen bisher bekannten Einkomponentenvorläufern ist somit nachteiligerweise das Si:B-Verhältnis an die verwendeten Einkomponentenvorläufer und die Art der Vernetzung gebunden. Die Stöchiometrie des C:N-Verhältnisses kann lediglich über die Pyrolysebedingungen und die Wahl der vernetzenden Agenz (NH₃ oder Alkylamine) gesteuert werden.

Bei der Pyrolyse erfolgt die Einstellung des C:N-Verhältnisses jedoch unkontrolliert durch nicht näher geklärte Reaktionen. Ein Nachteil dieser Synthesen liegt in der geringen Variationsmöglichkeit des C-Anteils, da eine Verlängerung der Seitenkette nicht zwangsläufig zu einem höheren C-Anteil in der Keramik, sondern zu Graphitausscheidungen im Material führt, was die Eigenschaften nachteilig beeinflusst.

In Appl. Organomet. Chem. 10 (1996) 241-256 werden zwar polymere borhaltige Carbosilane beschrieben, die durch Umsetzung von vinylgruppenhaltigen Polysilanen bzw. Polysilazanen mit Boranaddukten der Formel BH₃·SR₂ erhalten wurden. Diese Variationsmöglichkeit der Stöchiometrien durch die Verwendung von Nicht-Einkomponentenvorläuferverbindungen, wie z.B. in J. Am. Ceram. Soc. 355 (1990) 714-718 beschrieben, führt jedoch zu Keramiken, deren Eigenschaften (z.B. Temperaturstabilität) hinter den aus Einkomponentenvorläufern gewonnenen deutlich zurückbleiben.

N. Auner et al., Z. Anorg. Allg. Chem. 500, 1983, 132-160 beschreiben die Spaltung von Mono- und 1,3-Disiliacyclobutanen mit Lewis-Säuren. wobei als Spaltprodukte borhaltige Carbosilane erhalten werden. Die Verwendung der Spaltprodukte zur Herstellung von Oligo- und Polymeren sowie ihre Verwendung als Vorstufen für Keramiken ist nicht beschrieben.

Aufgabe der vorliegenden Erfindung war die Bereitstellung von neuartigen, einfach herstellbaren borhaltigen Carbosilanen, die eine große Variationsmöglichkeit aller konstituierenden Elemente, d.h. B, C, N und Si zulassen und als Vorstufen für neuartige, amorphe Siliciumborcarbonitridkeramiken eingesetzt werden können. Für spezifische Anwendungen soll so durch Stöchiometrieanpassung das jeweilige Eigenschaftsoptimum eingestellt werden können.

Es wurde nun gefunden, dass borhaltige Carbosilane der Formel (I) 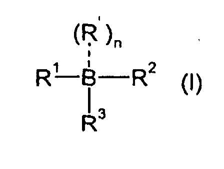 mit R¹ = 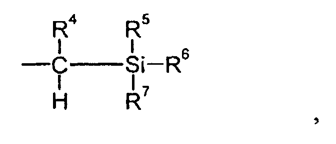 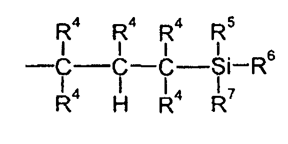 oder 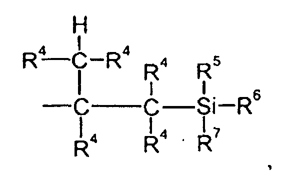 wobei
- R⁴ =: H, C₁-C₃-Alkyl und/oder Phenyl,
- R⁵ =: Cl, Br,
- R⁶, R⁷ =: Cl, Br, H, C₁-C₃-Alkyl oder Phenyl,
- R² =: R¹ oder Cl, Br,
- R³ =: R⁵,
- R' =: SMe₂, NMe₂H,
- mit n =: 0 für R² = R¹,
- n =: 1 für R² = R⁵
bedeuten,
das gewünschte Anforderungsprofil erfüllen.

Aus diesen borhaltigen Carbosilanen der Formel (I) lassen sich kohlenstoffreiche Keramiken herstellen, die sich sowohl durch eine erhöhte Beständigkeit gegen Alkali- und Erdalkali-Metalle und deren Verbindungen als auch durch eine hervorragende Oxidationsbeständigkeit auszeichnen. Zudem zeichnen sich die erfindungsgemäßen Keramiken durch hohe E-Module und Ritzhärte aus.

Gegenstand der Erfindung sind daher borhaltige Carbosilane der Formel (I) 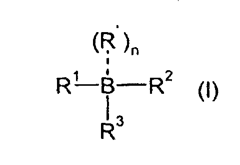 mit R¹ = 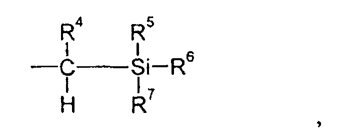 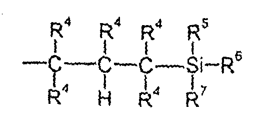 oder 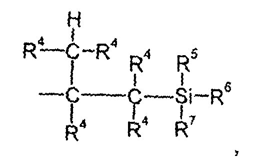 wobei
- R⁴ =: H, C₁-C₃-Alkyl und/oder Phenyl,
- R⁵ =: Cl, Br
- R⁶, R⁷ =: Cl, Br, H, C₁-C₃-Alkyl oder Phenyl
- R² =: R¹ oder Cl, Br,
- R³ =: R⁵,
- R' =: SMe₂, NMe₂H
- mit n =: 0 für R² = R¹,
- n =: 1 für R² = R⁵
bedeuten, außer der Verbindung

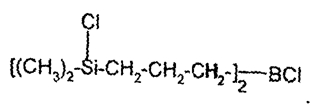

In einer bevorzugten Ausführungsform der Erfindung ist in den borhaltigen Carbosilanen der Formel (I) 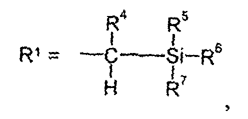 wobei
R⁴ = CH₃,
R⁵ = Cl oder Me,
R⁶ = Me,
R⁷ = R^{5,}
   und für
R² = R¹,
R³ = Cl ist,
sowie für den Fall, dass R² = Cl ist; n = 1 und R' = SMe₂ ist.

In einer weiteren bevorzugten Ausführungsform der Erfindung ist in den borhaltigen Carbosilanen der Formel (I) 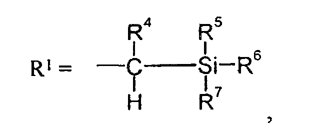 wobei
R⁴ = CH₃,
R⁵, R⁶ und R⁷ = Cl
   und für
R² = R¹
R³ = Cl ist,
sowie für den Fall, dass R² = Cl ist; n = 1 und R¹ = SMe₂ ist.

Gegenstand der Erfindung ist zudem ein Verfahren zur Herstellung der erfindungsgemäßen borhaltigen Carbosilane, wobei mindestens ein Halogenalkensilan der Formel (II) 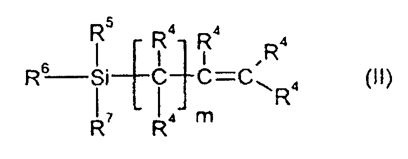 mit
R⁴ = H, C₁-C₃-Alkyl und/oder Phenyl,
R⁵ = Cl, Br,
R⁶, R⁷ = unabhängig voneinander Cl, Br, H, C₁-C₃-Alkyl oder Phenyl,
und m = 0 oder 1
mit Boranen der Formel (III)

HₓBR⁵₃₋ₓ―SMe₂

oder

HH₂₋ₓBR⁵ₓ―NHMe₂

mit x = 2 oder 1,
bevorzugt

HₓBR⁵₃₋ₓ―SMe₂

mit x = 2,
in einer Inertgasatmosphäre, wie z.B. N₂, Ar, He,
in einem aprotischen Lösemittel bei Temperaturen <20°C, vorzugsweise 0-10°C umgesetzt werden,
wobei das Verhältnis von Halogenalkensilanen der Formel (II) zu Boranen der Formel (III) durch x festgelegt wird, d.h., dass die Verbindungen der Formeln (II) und (III) entsprechend der Stöchiometrie x eingesetzt werden.

Bei allen unter die Formeln (II) und (III) fallenden Edukte handelt es sich um kommerziell erhältliche Produkte.

Aprotische Lösemittel im Sinne der Erfindung sind gegebenenfalls halogenierte aromatische und aliphatische Kohlenwasserstoffe, vorzugsweise Toluol, Hexan und/oder Dichlormethan.

In einer bevorzugten Ausführungsform des erfindungsgemäßen Verfahrens werden für den Fall, dass x = 1 ist, als aprotisches Lösemittel halogenierte Kohlenwasserstoffe eingesetzt.

Die erfindungsgemäße Reaktion wird anhand des folgenden Schemas beispielhaft erläutert:

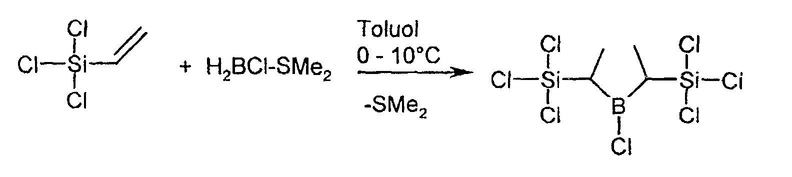

Ein weiterer Gegenstand der Erfindung sind borhaltige Carbosilane der Formel (IV) 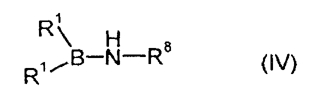 mit R¹ = 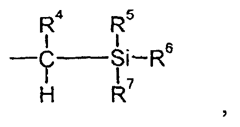 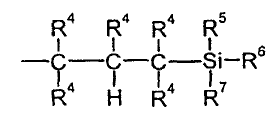 oder 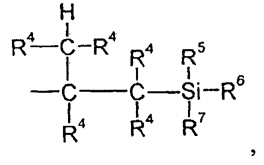 wobei
R⁴ = H, C₁-C₃-Alkyl und/oder Phenyl,
R⁵ = Cl, Br, bevorzugt Cl
R⁶, R⁷ = unabhängig voneinander Cl, Br, H, C₁-C₃-Alkyl oder Phenyl, bevorzugt Cl oder Methyl
   und
R⁸ für SiR⁹₃ steht, mit R⁹ = C₁-C₃-Alkyl oder Cl oder für 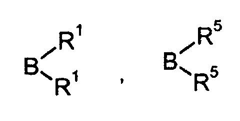 sowie 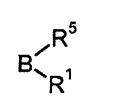 steht.

Gegenstand der Erfindung ist zudem ein Verfahren zur Herstellung von borhaltigen Carbosilanen der Formel (IV) wobei R⁸ für SiR⁹₃ steht, mit R⁹ = C₁-C₃-Alkyl oder Cl, bevorzugt steht R⁸ für SiCl₃, wonach mindestens ein borhaltiges Carbosilan der Formel (I), in der R² = R¹ ist und in der R⁶ und R⁷ unabhängig voneinander Cl, Br, H, C₁-C₃-Alkyl oder Phenyl sind, in einer Inertgasatmosphäre mit Me₃Si-NH-SiCl₃ bei Temperaturen <70°C, bevorzugt 20 bis 40°C, umgesetzt wird.

Me₃Si-NH-SiCl₃ ist z.B. herstellbar nach US-A 5 233 066.

Die erfindungsgemäße Reaktion wird anhand des folgenden Schemas beispielhaft erläutert:

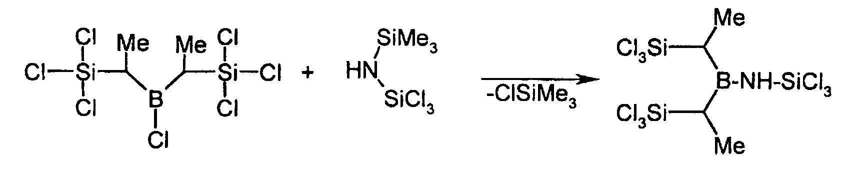

Gegenstand der Erfindung ist zudem ein Verfahren zur Herstellung von borhaltigen Carbosilanen der Formel (IV) mit 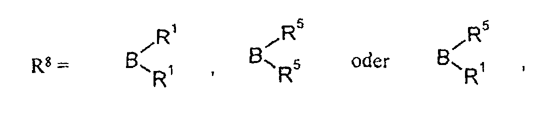 wonach mindestens ein borhaltiges Carbosilan der Formel (1), in der R¹ = R², ist mit Me₃Si-NH-SiMe₃ bei Temperaturen <70°C, vorzugsweise 20 bis 40°C umgesetzt wird, und im Anschluss daran das entstehende Produkt entweder mit BR⁵_{3,} BR⁵₂R¹ oder mit BR⁵(R¹)₂, umgesetzt wird, wobei R⁵ für Cl oder Br steht, vorzugsweise mit BR⁵(R¹)₂ mit R⁵, R⁶, R⁷ = Cl oder Br.

Die erfindungsgemäße Reaktion wird anhand des folgenden Schemas beispielhaft erläutert: 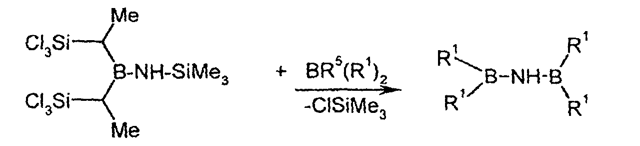 mit R¹ = C₂H₄SiCl₃

Ein weiterer Gegenstand der Erfindung sind borhaltige Oligo- oder Polycarbosilazane erhältlich durch die Umsetzung der erfindungsgemäßen borhaltigen Carbosilane mit NH₃ und/oder primären oder sekundären C₁-C₃-Alkylaminen, vorzugsweise MeNH₂ und/oder Me₂NH.

Ein weiterer Gegenstand der Erfindung ist ein Verfahren zur Herstellung der erfindungsgemäßen borhaltigen Oligo- oder Polycarbosilazane, wonach die borhaltigen Carbosilane der Formel (I) und/oder (IV) mit NH₃ und/oder mit primären oder sekundären C₁-C₃-Alkylaminen, vorzugsweise MeNH₂ und/oder Me₂NH, umgesetzt werden. Das Verfahren wird vorzugsweise bei Temperaturen zwischen -70 bis -40°C durchgeführt.

Zur Abtrennung des bei der Reaktion entstehenden Salzes, wie z.B. Ammoniumhydrochlorid oder Alkylaminhydrochlorid, können die borhaltigen Oligo- oder Polycarbosilazane in einem Lösemittel, besonders bevorzugt in THF, aufgelöst und die Salze abfiltriert werden.

Ein weiterer Gegenstand der Erfindung ist die Verwendung der erfindungsgemäßen borhaltigen Oligo- oder Polycarbosilazanen zur Herstellung von Siliciumborcarbonitridkeramiken.

Ein weiterer Gegenstand der Erfindung ist ein Verfahren zur Herstellung von Siliciurnborcarbonitridkeramiken, wonach das erfindungsgemäße borhaltige Oligo- oder Polycarbosilazan in Ammoniak- oder Inertgasatmosphäre bei Temperaturen zwischen 25 und 2000°C, vorzugsweise 1400 - 1800°C pyrolysiert wird.

Die Aufheizrate bei der Pyrolyse beträgt vorzugsweise 1-100 K/min, besonders bevorzugt 1- 20 K/min.

Ein weiterer Gegenstand der Erfindung ist die Verwendung der erfindungsgemäßen borhaltigen Oligo- oder Polyborocarbosilazane zur Herstellung von Keramikpulvern, keramischen Fasern, Beschichtungen, Verbundwerkstoffen oder Formkörpern.

### Ausführungsbeispiele:

### Beispiel 1

### Herstellung von Bis[(trichlorsilyl)ethyl]chlorboran

Zu einer Lösung von 36 ml (45,6; 0.285 Mol) Trichlorvinylsilan in 50 ml Toluol wurden unter starkem Rühren 14,6 ml (15,5g; 0,14 Mol) Dimethylsulfidmonochlorboran getropft. Dabei wurde die Temperatur durch Eiskühlung bei 10°C gehalten. Anschließend wurde noch 5 Stunden bei dieser Temperatur gehalten und dann weitere 24 Stunden bei Raumtemperatur gerührt. Nach Abzug des Lösemittels im Vakuum wurden 35,3 ml (49,0g; 0,133 Mol) flüssiges Bis[(trichlorsilyl)ethyl]chlorboran isoliert.

### Beispiel 2

### Umsetzung von Bis[(trichlorsilyl)ethyl]chlorboran mit Hexamethyldisilazan

In 4,0 ml (3,04g; 18,9 mMol) Hexamethyldisilazan wurden 10 ml Bis[(trichlorsilyl)ethyl]chlorboran (13,88g; 37,7 mMol) unter ständigem Rühren bei 0°C getropft. Die Reaktionslösung wurde danach noch 1 h bei 40°C zur Vervollständigung der Reaktion gerührt und entstandenes Trimethylchlorsilan abdestilliert. Es wurden 12,9g (18,9 mMol), entspricht quantitativer Ausbeute, Bis[bis[(trichlorsilyl)ethyl]boryl]-amin erhalten.

### Beispiel 3

### Synthese von [(Dichlormethylsilyl)]ethyldichlorboran-dimethylsulfid

20 ml (24.44g; 0,173 Mol) Dichlormethylvinylsilan wurden in 10 ml Dichlormethan gelöst und bei 0°C mit 20 ml (25,1g; 0,173 Mol) Dimethylsulfid-dichlorboran unter ständigem Rühren tropfenweise versetzt. Nach 5 h bei 0°C wurde das Reaktionsgemisch auf Raumtemperatur erwärmt und nach weiteren 24 h das Lösungsmittel unter vermindertem Druck abgezogen. Die Ausbeute an [(Dichlorrnethylsilyl)]ethyldichlorboran-dimethylsulfid war quantitativ.

### Beispiel 4

### Reaktion von [(Dichlormethylsilyl)]ethyldichlorboran-dimethylsulfid mit NH₃

32,8g (0,115 Mol) [(Dichlormethylsilyl)]ethyldichlorboran-dimethylsulfid wurden zu 200 ml einkondensiertem Ammoniak getropft und die Reaktionsmischung eine Stunde bei -60°C gerührt. Nach Aufwärmen und Entweichen von überschüssigem NH₃ wurde das Produkt in Tetrahydrofuran aufgenommen und das Beiprodukt NH₄Cl durch Filtration unter Schutzgas abgetrennt. Dann wurde das Lösungsmittel abdestilliert und 11,6g eines weißgelben Feststoffes, einem borhaltigen Polycarbosilazan mit einem Si:B-Verhältnis von 1:1 erhalten.

### Beispiel 5

### Pyrolyse des in Beispiel 4 erhaltenen Feststoffes.

Der Feststoff aus Beispiel 4 wurde in ein Quarz-Schlenkgefäß gegeben und in Argon bis 1100°C, ohne dass das Polymer zwischenzeitlich aufschmolz, aufgeheizt und bei dieser Temperatur für 1 Stunde gehalten. Es wurde ein schwarzes keramisches Pulver erhalten. Die keramische Ausbeute an Si-B-C-N- Keramik betrug 76 Gew.%.

## Patentansprüche

1. Borhaltige Carbosilane der Formel (I) 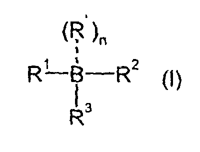 mit R¹ = 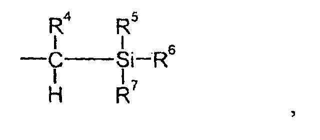 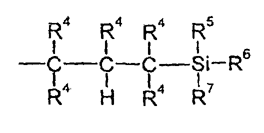 oder 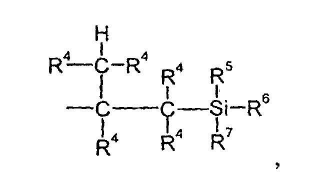 wobei
R⁴ = H, C₁-C₃-Alkyl und/oder Phenyl,
R⁵ = Cl, Br
R⁶, R⁷ = Cl, Br, H, C₁-C₃-Alkyl oder Phenyl
R² = R¹ oder Cl, Br,
R³ = R⁵,
R' = SMe₂, NMe₂H
mit n = 0 für R² = R¹,
n = 1 für R² = R⁵
bedeuten, außer der Verbindung

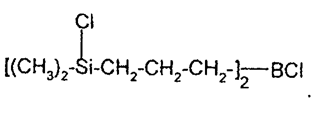

2. Borhaltige Carbosilane nach Anspruch 1, **dadurch gekennzeichnet, dass** 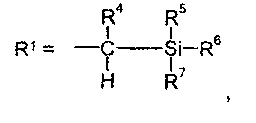 wobei
R⁴ = CH₃,
R⁵ = Cl oder Me,
R⁶ = Me,
R⁷ = R⁵,
und für
R² = R¹,
R³ = Cl ist,
sowie für den Fall, dass R² = Cl ist; n = 1 und R' = SMe₂ ist.

3. Verfahren zur Herstellung von borhaltigen Carbosilanen nach einem der Ansprüche 1 oder 2, **dadurch gekennzeichnet, dass** mindestens ein Halogenalkansilan der Formel (II) 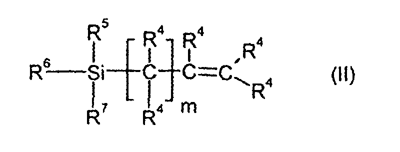 mit
R⁴ = H, C₁-C₃-Alkyl und/oder Phenyl,
R⁵ = Cl, Br,
R⁶, R⁷ = unabhängig voneinander Cl. Br. H, C₁-C₃-Alkyl oder Phenyl,
und m = 0 oder 1,
mit Boranen der Formel (III)
HₓBR⁵₃₋ₓ―SMe₂
oder
H₂₋ₓBR⁵ₓ―NHMe₂
mit x = 2 oder 1
in einer Inertgasatmosphäre in einem aprotischen Lösemittel bei Temperaturen <20°C umgesetzt werden,
wobei das Verhältnis von Halogenalkensilanen der Formel (II) zu Boranen der Formel (III) durch x festgelegt wird.

4. Verfahren nach Anspruch 3, **dadurch gekennzeichnet, dass**
für den Fall, dass x = 1 ist
als aprotisches Lösemittel halogenierte Kohlenwasserstoffe eingesetzt werden.

5. Borhaltige Carbosilane der Formel (IV) 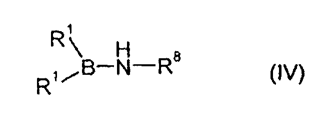 mit 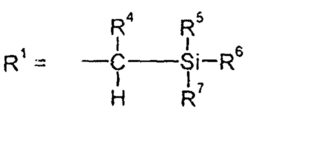 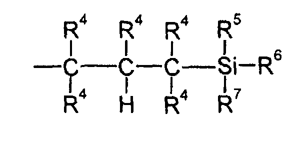 oder 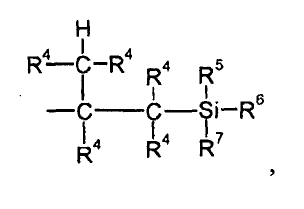 wobei
R⁴ = H, C₁-C₃-Alkyl und/oder Phenyl,
R⁵ = Cl, Br,
R⁶, R⁷ =unabhängig voneinander Cl, Br, H, C₁-C₃-Alkyl oder Phenyl
und
R⁸ für SiR⁹₃ steht, mit R⁹ = C₁-C₃-Alkyl oder Cl oder für 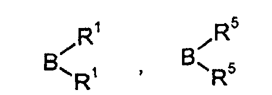
sowie 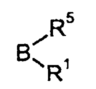 steht.

6. Verfahren zur Herstellung von borhaltigen Carbosilanen der Formel (IV) gemäß Anspruch 5, wobei R⁸ für SiR⁹₃ steht mit R⁹ = C₁-C₃-Alkyl oder Cl, **dadurch gekennzeichnet, dass** mindestens ein borhaltiges Carbosilan der Formel (I) gemäß Anspruch 1 und 2 mit R² = R¹ und worin R⁶ und R⁷ unabhängig voneinander für Cl, Br, H, C₁-C₃-Alkyl oder Phenyl stehen und mit Me₃Si-NH-SiCl₃ bei Temperaturen <70°C umgesetzt wird.

7. Verfahren zur Herstellung von borhaltigen Carbosilanen der Formel (IV) gemäß Anspruch 5, wobei
R⁸ für 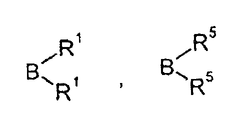 oder 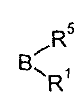 steht,
**dadurch gekennzeichnet, dass** mindestens ein borhaltiges Carbosilan der Formel (I) gemäß Anspruch 1 und 2 mit R¹ = R² mit Me₃Si-NH-SiMe₃ in einer Inertgasatmosphäre bei Temperaturen <70°C umgesetzt wird und im Anschluss daran das entstehende Produkt entweder mit BR⁵₃, BR⁵₂R¹ oder mit BR⁵(R¹)₂ umgesetzt wird, wobei R⁵ für Cl oder Br steht.

8. Borhaltige Oligo- oder Polycarbosilazane erhältlich durch die Umsetzung von borhaltigen Carbosilanen nach einem oder mehreren der Ansprüche 1, 2 oder 5 mit NH₃ und/oder primären oder sekundären C₁-C₃-Alkylaminen.

9. Verfahren zur Herstellung von borhaltigen Oligo- oder Polycarbosilazanen nach Anspruch 8, **dadurch gekennzeichnet, dass**
die borhaltigen Carbosilane der Formel (1) gemäß Anspruch 1 und 2 und/oder der Formel (IV) gemäß Anspruch 5
mit NH₃ und/oder mit primären oder sekundären C₁-C₃-Alkylaminen umgesetzt werden.

10. Verwendung von borhaltigen Oligo- oder Polycarbosilazanen gemäß Anspruch 8 zur Herstellung von Siliciumborcarbonitridkeramiken.

11. Verfahren zur Herstellung von Siliciumborcarbonitridkeramiken, **dadurch gekennzeichnet, dass** mindestens ein borhaltiges Oligo- oder Polycarbosilazan nach Anspruch 8 in Ammoniak- oder Inertgasatmosphäre bei Temperaturen zwischen 25 und 2000°C pyrolysiert wird.

12. Verwendung der borhaltigen Oligo- oder Polyborocarbosilazane nach Anspruch 8 zur Herstellung von Keramikpulvern, keramischen Fasern, Beschichtungen, Verbundwerkstoffen oder Formkörpern.

## Claims

1. Boron-containing carbosilanes of the formula (I) 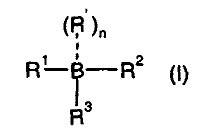 where R¹ = 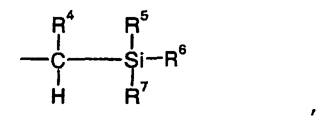 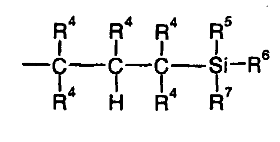 or 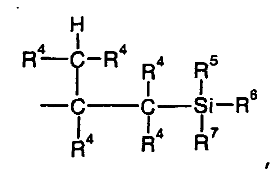 where
R⁴ = H, C₁-C₃-alkyl and/or phenyl,
R⁵ = Cl, Br,
R⁶, R⁷ = Cl, Br, H, C₁-C₃-alkyl or phenyl,
R² = R¹ or Cl, Br,
R³ = R⁵
R' = SMe₂, NMe₂H,
where n = 0 when R² = R^{1,}
n = 1 when R² = R^{5,}
with the exception of the compound

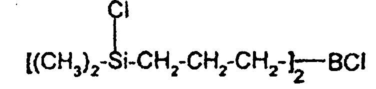

2. Boron-containing carbosilanes according to Claim 1, **characterized in that** 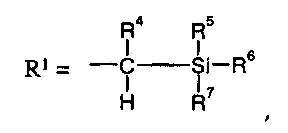 where
R⁴ = CH₃,
R⁵ = Cl or Me,
R⁶ = Me,
R⁷ = R⁵,
and when
R² = R¹,
R³ is Cl,
and when R² is Cl; n = 1 and R¹ is SMe₂.

3. Process for preparing boron-containing carbosilanes according to one of Claims 1 or 2, **characterized in that** at least one halogenoalkenesilane of the formula (II) 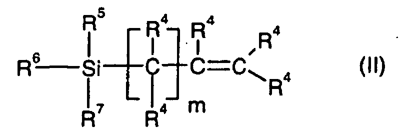 where
R⁴ = H, C₁-C₃-alkyl and/or phenyl,
R⁵ = Cl, Br,
R⁶, R⁷ = independently of one another Cl, Br, H, C₁-C₃-alkyl or phenyl,
and m = 0 or 1
is reacted with boranes of the formula (III)
HₓBR⁵₃₋ₓ―SMe₂
or
H₂₋ₓBR⁵ₓ―NHMe₂
where x = 2 or 1,
in an inert gas atmosphere in an aprotic solvent at temperatures <20°C,
in which case the ratio of halogenoalkenesilanes of the formula (II) to boranes of the formula (III) is established by x.

4. Process according to Claim 3, **characterized in that**
when x is 1
the aprotic solvent is halogenated hydrocarbons.

5. Boron-containing carbosilanes of the formula (IV) 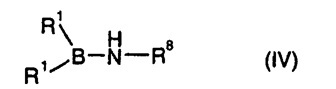 where 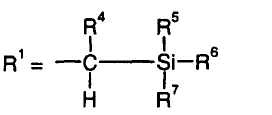 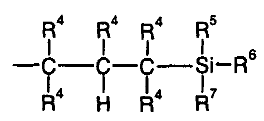 or 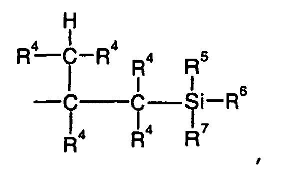 where
R⁴ = H, C₁-C₃-alkyl and/or phenyl,
R⁵ = Cl, Br,
R⁶, R⁷ = independently of one another are Cl, Br, H, C₁-C₃-alkyl or phenyl
and
R⁸ represents SiR^{9₃} where R⁹ = C₁-C₃-alkyl or Cl or represents

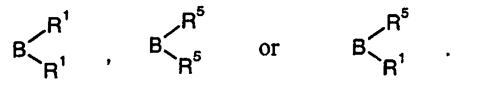

6. Process for preparing boron-containing carbosilanes of the formula (IV) according to Claim 5 where R⁸ represents SiR^{9₃} where R⁹ = C₁-C₃-alkyl or Cl, **characterized in that** at least one boron-containing carbosilane of the formula (I) according to Claim 1 and 2 where R² = R¹ and in which R⁶ and R⁷ independently of one another are Cl, Br, H, C₁-C₃-alkyl or phenyl is reacted with Me₃Si-NH-SiCl₃ at temperatures <70°C.

7. Process for preparing boron-containing carbosilanes of the formula (IV) according to Claim 5 where
R⁸ represents 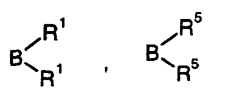 or 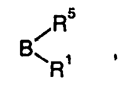 **characterized in that** at least one boron-containing carbosilane of the formula (I) according to Claim 1 and 2 where R¹ = R² is reacted with Me₃Si-NH-SiMe₃ in an inert gas atmosphere at temperatures <70°C and subsequently thereto the resultant product is reacted either with BR⁵₃ BR⁵₂R¹ or BR⁵(R¹)₂, where R⁵ represents Cl or Br.

8. Boron-containing oligo- or polycarbosilazanes obtainable by the reaction of the boron-containing carbosilanes according to one or more of Claims 1, 2 or 5 with NH₃ and/or primary or secondary C₁-C₃-alkylamines.

9. Process for preparing boron-containing oligo- or polycarbosilazanes according to Claim 8, **characterized in that**
the boron-containing carbosilanes of the formula (I) according to Claim 1 and 2
and/or of the formula (IV) according to Claim 5
are reacted with NH₃ and/or with primary or secondary C₁-C₃-alkylamines.

10. Use of boron-containing oligo- or polycarbosilazanes according to Claim 8 for preparing silicon borocarbonitride ceramics.

11. Process for preparing silicon borocarbonitride ceramics, **characterized in that** at least one boron-containing oligo- or polycarbosilazane according to Claim 8 is pyrolysed in an atmosphere of ammonia or inert gas at temperatures from 25 to 2000°C.

12. Use of the boron-containing oligo- or polyborocarbosilazanes according to Claim 8 for preparing ceramic powders, ceramic fibres, coatings, composite materials or mouldings.

## Revendications

1. Carbosilanes contenant du bore de la formule (I) 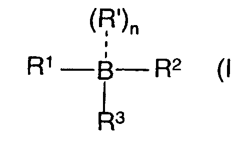 avec R¹ = 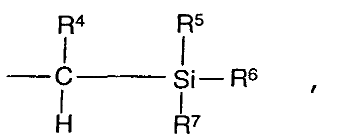 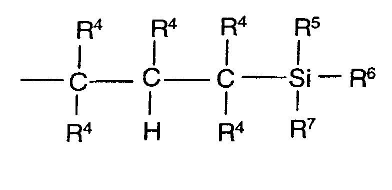 ou 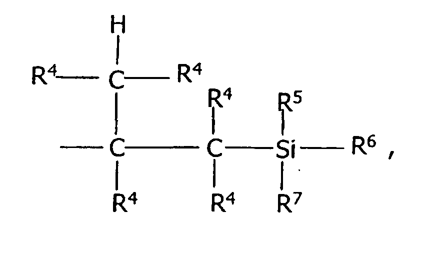 où
R⁴ = H, un groupe alkyle en C₁-C₃ et/ou phényle,
R⁵ = Cl, Br,
R⁶, R⁷ = Cl, Br, H, un groupe alkyle en C₁-C₃ ou phényle,
R² = R¹ ou Cl, Br
R³ = R⁵,
R' = SMe₂, NMe₂H,
avec n = 0 pour R² = R¹,
n = 1 pour R² = R⁵
à l'exclusion du composé

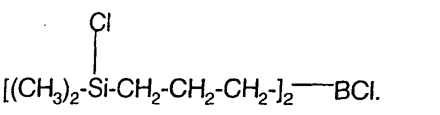

2. Carbosilanes contenant du bore selon la revendication 1, **caractérisés en ce que** 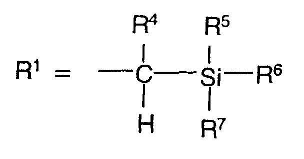 où
R⁴ = CH₃,
R⁵ = Cl ou Me,
R⁶ = Me,
R⁷ = R⁵,
et pour
R² = R¹,
R³ = Cl,
ainsi que dans le cas où R² = Cl ; n = 1 et R = SMe₂.

3. Procédé pour la préparation de carbosilanes contenant du bore selon l'une quelconque des revendications 1 ou 2, **caractérisé en ce que** l'on fait réagir au moins un halogéno-alcène-silane de la formule (II) 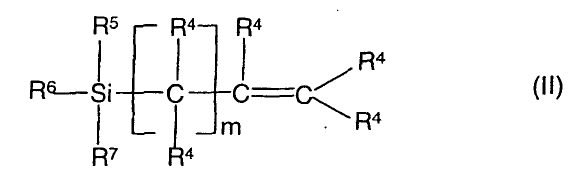 avec
R⁴ = H, un groupe alkyle en C₁-C₃ et/ou phényle,
R⁵ = Cl, Br,
R⁶, R⁷ = indépendamment Cl, Br, H, un groupe alkyle en C₁-C₃ ou phényle,
et m = 0 ou 1,
avec des boranes de la formule (III)
HₓBR⁵₃₋ₓ―SMe₂
ou
H₂₋ₓBR⁵ₓ―NHMe₂
avec x = 2 ou 1
dans une atmosphère de gaz inerte dans un solvant aprotique à des températures < 20°C,
le rapport des halogéno-alcène-silanes de la formule (II) aux boranes de la formule (III) étant déterminé par x.

4. Procédé selon la revendication 3, **caractérisé en ce que** dans le cas où x = 1, on utilise comme des hydrocarbures halogénés solvant aprotique.

5. Carbosilanes contenant du bore de la formule (IV) 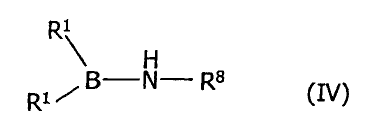 avec 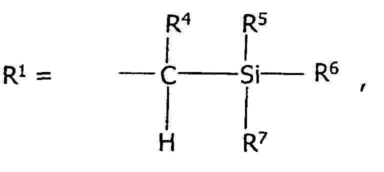 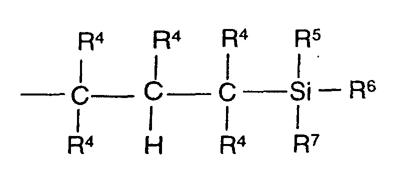 ou 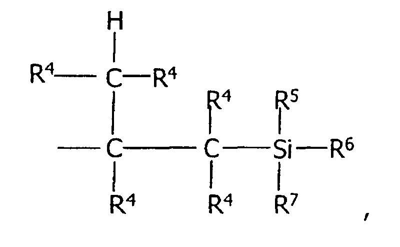 où
R⁴ = H, un groupe alkyle en C₁-C₃ et/ou phényle,
R⁵ = Cl, Br,
R⁶, R⁷ = indépendamment Cl, Br, H, un groupe alkyle en C₁-C₃ ou phényle et
R⁸ représente SiR⁹₃ avec R⁹ = un groupe alkyle en C₁-C₃ ou Cl ou 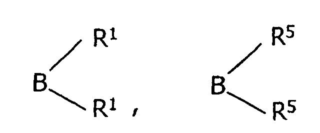
ainsi que

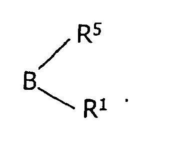

6. Procédé pour la préparation de carbosilanes contenant du bore de la formule (IV) selon la revendication 5, R⁸ représentant SiR⁹₃ avec R⁹ = groupe alkyle en C₁-C₃ ou Cl, **caractérisé en ce que** l'on fait réagir au moins un carbosilane contenant du bore de la formule (I) selon la revendication 1 et 2 avec R² = R¹ et où R⁶ et R⁷ sont indépendamment Cl, Br, H, un groupe alkyle en C₁-C₃ ou phényle et avec Me₃Si-NH-SiCl₃ à des températures < 70°C.

7. Procédé pour la préparation de carbosilanes contenant du bore de la formule (IV) selon la revendication 5,
R⁸ étant 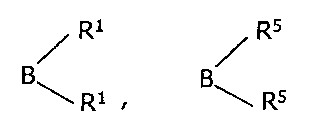 ou 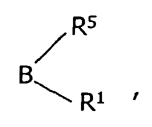 **caractérisé en ce que** l'on fait réagir au moins un carbosilane contenant du bore de la formule (I) selon la revendication 1 et 2 avec R¹ = R² avec Me₃Si-NH-SiMe₃ dans une atmosphère de gaz inerte à des températures < 70°C et **en ce que** l'on fait ensuite réagir le produit obtenu soit avec BR⁵₃, BR⁵₂R¹ ou avec BR⁵(R¹)₂, R⁵ étant Cl ou Br.

8. Oligo- ou polycarbosilazanes contenant du bore pouvant être obtenus par la réaction de carbosilanes contenant du bore selon l'une ou plusieurs quelconques des revendications 1, 2 ou 5 avec NH₃ et/ou des alkylamines en C₁-C₃ primaires ou secondaires.

9. Procédé pour la préparation d'oligo- ou de polycarbosilazanes contenant du bore selon la revendication 8, **caractérisé en ce que** l'on fait réagir les carbosilanes contenant du bore de la formule (I) selon la revendication 1 et 2 et/ou de la formule (IV) selon la revendication 5, avec NH₃ et/ou des alkylamines en C₁-C₃ primaires ou secondaires.

10. Utilisation d'oligo- ou de polycarbosilazanes contenant du bore selon la revendication 8 pour la préparation de céramiques de carbonitrures de bore et de silicium.

11. Procédé pour la préparation de céramiques de carbonitrures de silicium et de bore, **caractérisé en ce que** l'on pyrolyse au moins un oligo- ou polycarbosilazane contenant du bore selon la revendication 8 dans une atmosphère d'ammoniac ou de gaz inerte à des températures comprises entre 25 et 2000°C.

12. Utilisation des oligo- ou polyborocarbosilazanes contenant du bore selon la revendication 8 pour la préparation de poudres céramiques, de fibres céramiques, de revêtements, de matières composites ou de corps moulés.
